# EUROPEAN PATENT APPLICATION

(11) **EP 4 592 340 A1**
(43) Date of publication of application: **30.07.2025**
(21) Application number: 24305132.3
(22) Date of filing: 24.01.2024
(51) Int. Cl.: C08J 11/12

(54) **PROCESS FOR CONVERTING PLASTIC INTO RAW MATERIAL**

(71) Applicant: Centre National de la Recherche Scientifique, 75016 Paris (FR); Université de Strasbourg, 67081 Strasbourg Cedex (FR); SICAT, 67000 Strasbourg (FR); Blackleaf, 67400 Illkirch-Greffenstaden (FR)
(72) Inventor: DUONG-VIET, Cuong, 67400 Illkirch-Graffenstaden (FR); PHAM, Charlotte, 67000 Strasbourg (FR); PHAM-HUU, Cuong, 67100 Strasbourg (FR); TRUONG-PHUOC, Lai, 67200 Strasbourg (FR); NHUT, Jean-Mario, 67115 Plobsheim (FR); BA, Housseinou, 67000 Strasbourg (FR); LAFUE, Yannick, 67100 Strasbourg (FR); WAMBERGUE, Stéphane, 67000 Strasbourg (FR)
(74) Representative: Alatis

(57) **Abstract**

The present invention relates to a process for converting plastic into raw material, comprising:
a) optionally, a step of pre-cracking the plastic, which is carried out at a temperature comprised between 250°C and 500°C, preferably between 450°C and 500°C, and
b) a step of indirect joule heating of the plastic or of the product obtained at step a) if step a) is present, at a temperature greater than or equal to 600 °C, preferably greater than or equal to 650 °C,
wherein during step b) and, when it is present, step a), the residence time of the plastic or the product obtained at step a) is comprised between 1 second and 30 minutes

## Description

### Technical field

The present invention refers to a process for converting plastic into raw material.

The present invention has utility in plastic and chemistry industry field, especially in recycling field.

In the description below, the references into brackets ([ ]) refer to the listing of references situated at the end of the text.

### Background of the Invention

Plastics represent one of the main commodities for daily uses in almost every domain, spanning from industrial packaging to health care and composites for transport and storage. By 2025, plastic production is expected to exceed 600 metric tons/year and then double by 2050. The majority of them are used in packaging (mostly as single-use), while the others ended up in construction, automotive, electrical devices, healthcare and many others applications. The single-use of plastics (40 %) as commodities represents one of the main contribution to CO₂, causing problem for environmental and health as nowadays, about 90% of the waste plastic is dumped or landfilled while only a small amount is recycled. In addition, a large part of waste plastic is ending up in rivers and oceans, posing problems for natural environment.

New legislations and environmental pushes significantly contribute to the increase of waste plastic recycling to produce raw material for new plastics or liquid fuels for transportation and petrochemicals. The plastic-to-fuel (PTF) transformation has received an ever increasing academic but also industrial interest since the last years. Most recently, several announcements have been made by different industrials for new plants settling to convert waste plastics into valuable gaseous/liquids components which contribute to the renewable interest for such process.

Plastic waste as such is contaminated with other products and thus, preliminary sorting and cleaning are necessary before initiating the recycling process. Nowadays, depending on the quality and purity of the plastic waste, different processes for recycling can be used: (i) reuse (direct from the waste plastic), (ii) reprocessing or mechanical recycling, (iii) depolymerization to the raw monomeric material (not for all types of waste plastic), (iv) conversion of the waste plastic into hydrocarbon feedstock, and finally (v) energy recovery through incineration. The recycling efficiency also depends on the nature of the various additives present in the plastic.

The conversion of plastic to liquid or gaseous hydrocarbons also allows one to recycle solid waste fractions that cannot be reused or recycled through mechanical or depolymerization processes and to avoid landfill or incineration. Waste plastic recycling allows one to reduce in a significant manner the greenhouse gas (GHG) emission compared to incineration. Alongside with the conversion of waste plastic into liquid fuels, other researches also aim to convert such wastes into light olefins, which display high interest for base chemicals, i.e. raw monomers for plastics production. However, the direct conversion of waste plastics into light olefins is not a straightforward process and thus, indirect route is developed through converting waste plastics into intermediate hydrocarbons and further converting such chemicals into light olefins. Onwudili et al. (Onwudili et al., 2019 ([1])) investigated the conversion of polyolefin vapors from a mixture of plastics (HDPE, LDPE, PP, PS and PET) over FCC (Fluid Catalytic Cracking) with Y-zeolite at 500°C and ZSM-5 zeolite at 600°C. The amount of C₂-C₄ olefins obtained remains relatively low at ca. 21 wt%.

Depolymerization of polyolefins into their monomeric constituents, plastic-to-olefins (PTO) process, requires relatively harsh pyrolysis conditions and results in a complex mixture of hydrocarbons. In general, pyrolysis of polyolefin at temperature ≤ 500 °C yields a mixture of paraffins with carbon chain length in the range of C₁₀-C₄₀ while more aromatics are produced at more severe conditions and finally, olefin-rich gas and char were produced at even more severe conditions (≥ 700 °C) (Lopez et al., 2017 ([2]); Dogu et al., 2021 ([3])). In order to maximize the olefins fraction, the aliphatic compounds produced under mild conditions can be further processed into lower olefins through a steam cracker which can produce a yield lower than 50 wt. % of olefins. The Synova technology is based on the use of hot fluidized sand bath to crack plastic wastes to produce liquid and tar which is further cracked to produce olefin-rich gas. Anellotech and BioBTX have developed pyrolysis using acid zeolites to convert the plastic pyrolysis vapors to lower olefins and waxes. However, catalyst deactivation requires complex reactor design and frequent catalyst regenerations (J.-P. Lange ([4])). Recent article published by Tran et al. (Tran X. T. et al., 2024 ([11]) has reported on the high conversion of crude waste plastic pyrolysis oil on P-modified steam-treated ZSM-5 to produce light olefins. Despite such promising results the catalyst deactivation poses problem for industrial development as the catalyst undergo deactivated within 810 s, due to coke deposition, which calls for frequent regeneration.

In addition, in order to reduce the GHG emissions of the chemical industry, it is highly desirable to replace the usual way of operating catalytic processes, i.e. a combination of large gas burners and metal catalysts, by a brand new one. The replacement of natural gas burners by electrified heating systems has received a tremendous industrial interest since the last few years. For example, the recent consortium regrouping several petroleum industrials develops new steam crackers operating with electricity (Layritz et al., 2021 ([5])), electrocatalysis (Schiffer et al., 2017 ([6])) or with intermediate heating modes using electricity such as microwave, plasma or induction heating (Jie et al., 2020 ([7]); Zhou et al., 2021 ([8])). It is also desirable to replace traditional supported metal or zeolitic catalysts by metal-free ones with reduced production costs and environmental impacts (spent catalyst recycling or disposal). Last but not least, the ability to use electricity, directly or indirectly, to produce chemicals, also represents a smart way for storing excedental electrical energy from renewable sources, which could help to improve the energy harvesting from solar and wind.

Inductive heating (IH) has been widely developed in the manufacturing of industrial metallic work pieces (bonding, welding, sintering) in several industries. The heat is generated directly inside the targeted material and thus, it significantly reduces the energy lost by conduction or thermal radiation (Wang et al., 2019 ([9])). In such processes, the heat can be directed inside the interest area without over heating the whole large volume of the oven. For catalytic processes, it can thus avoid thermal decomposition of the reactants and products that would form unwanted amorphous carbon or by-products. Recently, IH mode has been reported as an efficient heating mode for operating catalytic processes with significant improved performance (Wang et al., 2019 ([9])). Alongside with the advantages cited above, IH also represents a green heating mean for operating catalytic processes as it can be operated using exceeding renewable energy (RE) sources, instead of using traditional fuel burner for providing heat to the reactor, which contributes to the reduction of CO₂ for the process. The faster heat generation in the system could also reduce energy loss generated during long start-up when using traditional indirect heating mode. The rapid quenching of the exit gaseous effluent, due to the targeted heating of IH, also reduces in a significantly way the cost of the process by suppressing cooling system at the exit of the catalytic section.

The most commonly used catalysts, for either PTF or PTO (plastic-to-olefin) transformation, are based on acidic zeolites, i.e. ZSM5, USY, which are operated through acidic cracking to generate liquid or gaseous hydrocarbons from pyrolysis polymer vapors. However, zeolites are generally subjected to drastic deactivation by pore plugging consecutive to carbon deposition during the process (Tran et al. ([11])). A recent study also pointed out the use of acid carbon-based catalysts for converting industrial waste plastics into jet fuel (Y. Zhang et al. ([10])).

However, a need exists for an alternative method that is easy to use, highly selective and energy efficient. The present invention fulfills these and other needs.

### Description of the invention

Following extensive research, the Applicant has developed a process allowing to convert plastic into raw material.

Surprisingly, the Applicant reports on the possibility to selectively convert plastic into C₂-C₄ olefins and/or other hydrocarbons.

More particularly, the process of the invention allows to selectively convert plastic into ethylene, propylene, butylene and diolefins made from ethylene, propylene and butylene, and/or other hydrocarbons such as aromatic hydrocarbons, C₅₊ liquid hydrocarbons, paraffinic gaseous C₁ to C₄ hydrocarbons and/or C₂₀-C₄₀ waxes.

One of the advantages of the invention is that it can be realized as a one stage or as a two-stage process, i.e., plastic pre-cracking in a first-stage reactor, while the plastic vapors/liquids or pre-cracked products are swept, possibly with an inert gas, toward the reaction stage on the solid material heated by indirect Joule heating. Advantageously, the pre-cracking stage produces liquid and/or gaseous products. Such two-stage process facilitates the control of the temperature of both the pre-cracking stage and the reaction stage. Both model and industrial real waste plastics, including intermediate products from plastic recycling processes, may be used in the PTO or PTF process of the invention.

Another advantage of the invention is that the pre-cracking step and reaction temperature can be decoupled, which allows one to tune the reaction temperature, in order to modulate either liquid or light olefinic products, i.e. C₂-C₄ olefins, depending to the downstream applications.

Another advantage of the invention is that it is a two steps process. Therefore, pre-cracking and reaction steps can be operated in different locations, allowing to operate pre-cracking to convert the waste polymer into pyrolysis oil in smaller units, close to waste collection points, to reduce transportation costs versus raw plastics to a larger unit for the reaction step.

Accordingly, in a first aspect, the present invention provides a process for converting plastic into raw material, comprising:
a) optionally, a step of pre-cracking the plastic, which is carried out at a temperature comprised between 250°C and 500°C, preferably between 450°C and 500°C, and
b) a step of indirect joule heating of the plastic or of the product obtained at step a) if step a) is present, at a temperature greater than or equal to 600 °C, preferably greater than or equal to 650 °C,
wherein during step b) and, when it is present, step a), the residence time of the plastic or the product obtained at step a) is comprised between 1 s and 30 minutes, and preferably between 1 second and 30 minutes in step a) and between 5 s and 600 seconds in step b).

In the present application:
- the expression "comprised between ... and ..." should be understood as including the limits;
- any description, even though described in relation to a specific embodiment, is applicable to and interchangeable with other embodiments of the present invention;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list; and
- any recitation herein of numerical ranges by endpoints includes all numbers subsumed within the recited ranges as well as the endpoints of the range and equivalents.

"Plastic" should be understood herein in its broadest meaning. In particular, plastic refers herein to any synthetic material made of organic polymers and that can be molded into shape while soft, and then set into a rigid or slightly elastic form. It may be for example at least one selected among high and low-density polyethylene (HDPE, LDPE), polypropylene, polystyrene, mixed industrial waste plastic, as low-density polyethylene, PET, PVC and polystyrene containing solid residue, plastics containing solid residue, C₅-C₅₀ waxes such as intermediate products from plastic recycling processes, and polymers distilled at temperatures between 200 and 600°C. The fact that the process of the invention may be realized on intermediate products from plastic recycling processes makes it possible to use the process of the invention for recycling tires, crude petroleum, waxes issued from other processes such as Fischer-Tropsch synthesis, and kerosene.

Raw material may be any material that is at least partially depolymerized after the process has been applied to the plastic, or after the first depolymerization step as described above. In other words, raw material may consist of shorter-chain hydrocarbons compared to the plastic. Advantageously, the raw material may be at least one selected among C₂-C₄ olefins and/or other hydrocarbons, i.e. other shorter chain hydrocarbons or aromatics compared to the plastic.

"C₂-C₄ olefins" refers herein to at least one aliphatic alkene chosen among ethylene, propylene, butylene and diolefins made from ethylene, propylene and butylene. Preferably, it may be ethylene and/or propylene. According to the invention, the plastic may be converted into one specific olefin, or into a mixture of olefins. In some cases, the conversion may not be complete, and possible traces of diolefins may occur, such as diolefins made from ethylene, propylene and butylene.

"Other hydrocarbons" refers herein to any hydrocarbons other than C₂-C₄ olefins. It may be for example at least one among aromatic hydrocarbons, paraffinic gaseous C₁ to C₄ hydrocarbons and/or liquid hydrocarbons having at least 5 carbon atoms (also refers herein as C₅₊), such as C₅-C₁₀, including aromatics compounds, fuel oil, or waxes having from 20 to 40 carbon atoms. It may refer to a mixture of at least two of these hydrocarbons.

The process of the invention may be carried out in any reactor commonly used in this technical field, for example a multi or two-stage reactor which could be kept at different temperatures. Step a) may correspond to a first stage, and step b) may correspond to a second stage in the reactor.

The process can be operated in continuous mode or in discontinuous mode.

As mentioned above, step a) of pre-cracking the plastic is optional, meaning that it can be present before step b) or it can be absent. Step a) of pre-cracking advantageously allows the production of fragments of plastic polymers with shorter chains, such as C₁₅-C₄₅, or even C₂₀-C₄₀. It may also allow the vaporization of the plastic (e.g, waste plastic) to produce a mixture of liquid and gas. It is noted that the gas fraction can be increased by increasing the residence time to greater than or equal to 3 minutes of the plastic polymer within this pre-cracking stage. The vaporization of the plastic can be also sped up by increasing the temperature at the exit of the pre-cracking stage as at high temperature the liquid long-chain hydrocarbons will be vaporized to gas fraction of the exit mixture, thus containing approximately 50 wt.% of liquid and 50 wt.% of gas, and most preferably 20 wt.% of liquid and 80 wt.% of gas, or 10 wt.% of liquid and 90 wt.% of gas, or even 100 wt.% of gas. Therefore, the first step of pre-cracking may be advantageous as it shifts the reaction conversion, in the second stage, towards obtaining olefin(s) rather than other hydrocarbons, and therefore allows obtaining a greater level of C₂-C₄ olefins than other hydrocarbons, compared to a process without the first step.

When step a) is absent:
- plastic polymers may be directly cracked in shorter chains such as C₁₅-C₄₅ or C₂₀-C₄₀ hydrocarbons if plastic is selected among high and low-density polyethylene (HDPE, LDPE), polypropylene, polystyrene, mixed industrial waste plastic, as low-density polyethylene, PET, PVC and polystyrene containing solid residue, plastics containing solid residue, or
- plastic polymers may be cracked in C₂-C₄ olefins if plastic is C₅-C₅₀ waxes such as intermediate products from plastic recycling processes, or polymers melted at temperatures between 200 and 600°C.

When step a) is present, the raw material obtained following step b) is mainly C₂-C₄ olefins or liquid hydrocarbons with a relatively high amount of aromatics, whatever the starting plastic material. Indeed, the product obtained at step a), i.e. the product obtained at the end of step a), may consist of shorter-chain hydrocarbons compared to the plastic, especially C₁₅-C₄₅ polymers.

Therefore, an advantage of the process is that the presence or absence of pre-cracking step allows one to modulate either light olefinic products or long-chain hydrocarbons or waxes depending to the downstream applications.

Advantageously, step a) of pre-cracking, when it is present, may be carried out on any material. For example, it can be carried out in the presence of some material which can harvest the heat from the reactor in order to improve the heat transfer to the plastic in step a), while vapors and/or liquids are swept toward heatable material in step b). The liquids produced in the step a) can be in a gaseous form at the exit temperature of the stage. Preferably, the optional step of pre-cracking may be carried out on any heatable material. Advantageously, the heatable material may be selected among a carbon material or a metal-free carbon material as defined below, notably a mesoporous carbon or a monolithic carbon, silicon carbide or metal parts, or even insulator if the residence time is sufficiently long to melt down the plastic.

When it is present, the optional step a) may be carried out by any heating method commonly used by the skilled person in order to pre-crack the plastic, for example induction heating, indirect Joule heating, indirect burner heating or microwave heating.

"Induction heating" refers herein to a process wherein the material is heated by a current, generated on its surface through interaction with an electromagnetic field provided by an inductor. In an embodiment of the invention, the material may be heated by generating an alternating electromagnetic field within a reaction zone containing said material, where the alternating electromagnetic field passes through the reaction zone thereby generating an electric current in said material and heating the material. Advantageously, the high intrinsic thermal conductivity of the material allows a rapid heat transfer from the outer surface to the core of the material. The high intrinsic electrical and thermal conductivity of the material also allows to maintain the reaction temperature at the set temperature, despite the high endothermicity of the reaction and advantageously avoids the production of long chain liquid hydrocarbons due to the decrease of the temperature inside the bed.

Advantageously, the step of induction heating may be carried out at a reaction pressure comprised between 0.5 and 20.0 bar, for example between 1 and 5.0 bar.

"Indirect Joule heating" refers herein to the process by which a reactor is heated by a resistor located outside the reactor, i.e. outside the catalytic bed, involving heat transfer by convection and conduction mechanisms.

"Indirect burner heating" refers herein to a process by which a reactor is heated by a burner outside the reactor, i.e. outside the catalytic bed, involving heat transfer by convection and conduction mechanisms.

"Microwave heating" refers herein to the process in which a radio frequency (RF) alternating electric field, or radio wave or microwave electromagnetic radiation heats a dielectric material, in accordance with its classic meaning.

As mentioned above, the step of pre-cracking the plastic is carried out at a temperature comprised between 250°C and 500°C, for example between 350°C and 500°C, or between 450°C and 500°C, more particularly between 350°C and 450°C, and preferably between 450°C and 470°C for polyolefins. The temperature may be adjusted within these value ranges by the skilled person in the light of his knowledge of the technical field. For example, it may be adjusted depending on the nature and amount of plastic, the presence or absence of heatable materials, or of the kind of heating mode. For example, if indirect Joule heating or burner heating is performed in step a), the temperature may be preferably comprised between 450°C and 500°C. Alternatively, if induction or microwave heating is performed, the temperature may be preferably comprised between 400°C and 450°C.

Whatever the heating method, the residence time of the plastic during step a) should be sufficient to prevent the melted plastic from blocking the gas passage in step a) as plastic does not heat up because it is insulating. As described above, the residence time is comprised between 1 s and 30 minutes, preferably between 1 s and 10 minutes, preferably between 10 s and 5 minutes. The residence time may be adjusted within these value ranges by the skilled person in the light of his knowledge of the technical field. For example, the pre-cracking step may be realized in a first-stage reactor. Then, the plastic vapors/liquids may be swept, for example with an inert gas such as argon, helium or nitrogen, toward the solid material in a second-stage reactor corresponding to step b) of the process, where the cracking process takes place. The C₂-C₄ olefins and/or other hydrocarbons are then obtained during the cracking step. In another operation mode other gas such as hydrogen or other light hydrocarbons can also be used as sweep gas.

Preferably, under inductive or microwave heating, the residence time during step a) may be comprised between 2 s and 10 s.

Other pre-cracking conditions as the pressure within the reactor, may be determined by the skilled person in the light of his knowledge of the technical field, especially depending on the nature and amount of plastic, the presence or absence of heat conductor materials, or of the kind of heating mode. Preferably, pressure is atmospheric pressure, i.e. 101,325 Pa.

Advantageously, the plastic obtained from step a) may be constituted by C₅-C₅₀ waxes and be subsequently submitted to step b).

Step b) may be indifferently referred to herein as the "cracking step", "Joule cracking step" or cracking stage".

Step b) of indirect joule heating may be carried out on any heat-conductor solid material, preferably a carbon material, more preferably a metal-free carbon material.

"Heat conductor material" refers in the context of the present invention to a material that allows energy in the form of heat, to be transferred within the material, without any movement of the material itself. It includes carbon material and metal-free carbon material but it can be any other heat conductor materials.

"Carbon material" refers in the context of the present invention to a material which is mainly constituted by carbon. For example, the material may be constituted by more than 50 wt.% of carbon, at least 80 wt.% of carbon, at least 85 wt.%, at least 90 wt.%, at least 95 wt.%, at least 98 wt.%, at least 99 wt.%, at least 99.5 wt.%, at least 99.9 wt.%, or at least 99.99 wt.% of carbon. As such, the carbon material employed herein may comprise a non-carbon component, as detailed below.

The non-carbon component may be any chemical component. In case of metal-free carbon material, the non-carbon component is any component that does not qualify as "metal" according to the definition below. The carbon material or metal-free carbon material may comprise one or several non-carbon elements or components, for example selected among Na, K, Si, S, N and O. In particular, the carbon material of the present invention may comprise one or several non-carbon elements selected in the group consisting of Na, K, Si, S, N and O, and mixtures thereof.

"Metal-free carbon material" refers herein to a material which is substantially free of metal, or preferably is totally free of metal. "Substantially free" means that the material may comprise trace impurities, including metals, metal oxides and/or zeolites. For example, the metal-free carbon material may comprise less than 3,000 ppm (0.3 wt.%) of metal based on the total weight of the material, less than 2,000 ppm, less than 1,000 ppm, less than 500 ppm, less than 200 ppm, less than 100 ppm, less than 50 ppm, less than 20 ppm, or even less than 1 ppm of metal.

"Metal" refers herein to any element that form metallic structures under ordinary conditions and are qualified on the periodic table of elements as metals, which includes alkali metals, alkaline earth metals, transition metals, lanthanides, actinides, and post-transition metals.

Interestingly, the use of metal-free carbon materials, in particular carbon materials comprising no additives or promoters is advantageous for preparing C2-C4 olefins, as metal-free carbon materials present stronger resistance towards deactivation through encapsulation by deposit carbon or coke precursors, as encountered with zeolite-based materials, as well as a better chemical stability in the presence of organic or inorganic impurities present in the processed polymers. Advantageously, the spent carbon-based material can be regenerated through chemical leaching without appreciable activity loss due to their high chemical inertness compared to other catalysts or materials. In another embodiment, the spent carbon catalyst can be also regenerated through an annealing step under inert gas at a temperature greater than or equal to 700 °C in order to convert the amorphous carbon deposit into a more ordered one which could play the role of catalyst.

Advantageously, the carbon material or the metal-free carbon material may be selected from the group comprising graphite, graphene, mesoporous carbon, carbon black, acetylene black, pyrolytic carbon, activated carbon, carbon nanofibers, carbon nanotubes and any combinations thereof.

The term "graphite" as used herein, refers to the crystalline form of the element carbon with its atoms arranged in a hexagonal structure. A graphitic carbon has the characteristics of an ordered three-dimensional graphite crystalline structure consisting of layers of hexagonally arranged carbon atoms stacked parallel to each other as determined by X-ray diffraction. The term graphite herein used includes both natural graphite, i.e. essentially in its geologically occurring natural crystalline form, and synthetic graphite, i.e. synthetically prepared or processed graphite. Examples of natural graphite include so-called amorphous (nanocrystalline) graphite, flake graphite, and vein graphite. Examples of synthetic graphite include pyrolytic graphite, highly oriented pyrolytic graphite (HOPG) and synthetic graphite flakes. The term "synthetic graphite" as used herein unless further qualified also intends to include non-expanded graphite.

The term "graphene" as used herein, refers to a polycyclic aromatic molecule with carbon atoms covalently bonded to each other in a same plane. The covalently bonded carbon atoms can form a six-member ring as a repeating unit, and may also include at least one of a five-member ring and a seven-member ring. Multiple graphene layers are referred to in the art as graphite. Thus, graphene may be a single layer, or also may comprise multiple layers of graphene that are stacked on other layers of graphene. Generally, graphene has a maximum thickness of about 100 nanometers (nm), specifically about 5 nm to about 90 nm, more specifically about 20 nm to about 80 nm. Graphene can be also used in the form of expanded graphite where the graphite structure was partially expanded through incorporation of molecules such as HNO₃, KOH between the layers, to generate a graphite-like structure with high accessibility.

The term "carbon black" as used herein, refers to a form of carbon having a high surface-area-to-volume ratio, albeit lower than that of activated carbon, with a short range ordered structure. Carbon black is a material produced by the incomplete combustion of coal and coal tar, vegetable matter, or petroleum products, including fuel oil, fluid catalytic cracking tar, and ethylene cracking.

The term "acetylene black" as used herein, refers to a carbon black produced by thermal decomposition of acetylene, having a high purity and few factors for inclusion of impurities among many carbon blacks, a high crystallinity and a developed structure.

The term "pyrolytic carbon" refers to any form of carbon obtained by pyrolysis of an organic feedstock or by decomposition of gaseous hydrocarbons at high temperature on a host substrate, be it ceramic or carbon materials.

The term "activated carbon" as used herein, refers to a form of carbon having small, low-volume pores that increase the surface area available for adsorption or chemical reactions. It can be produced from various sources such as bamboo, coconut husk, willow peat, wood, coir, lignite, coal, and petroleum pitch that are pyrolyzed and submitted to a subsequent activation treatment aimed at generating micropores. Carbon activation may be operated by any method known by the skilled person.

The term "mesoporous carbon" refers herein to a form of carbon material containing pores with diameters between 2 and 50 nm, according to IUPAC nomenclature. Advantageously, this porosity within the mesopore range significantly increases the specific surface area of carbon material.

Advantageously, the heat conductor material, particularly the carbon material, or more particularly the metal-free carbon material, used in the present invention may have different morphologies. The morphology is not particularly limited and may for instance include felt, for example rolled felt, grain, fiber, for example nanofiber, filament, 2D or 3D fabrics, foam as open cell foam, 3D-printed structures, sphere, cloth, monolith as honeycombs, extrudates, rod-shaped, sticks and particles, tube, for example nanotube, ring or trilobes, tablets, nanotablets and any combinations thereof.

Preferably, the heat conductor material may be selected among a graphite felt, a carbon felt, a carbon nanotube, and a carbon nanofiber.

The term "graphite felt" (GF) as used herein refers to a textile material that predominantly comprises randomly oriented and intertwined carbon filaments or fibers that has been subjected to a graphitisation process, which may involve heat treating the carbon felt at high temperatures, such as in the range of about 2,600°C to about 3,300°C. During the graphitising process, the randomly oriented and intertwined carbon filaments or fibers may be converted into an ordered graphite structure. The structuration of the as-synthesized graphite felt was realized through a known process called needle punching. A preferred example of a carbon material for use in the present invention is graphite felt, preferably with the following dimensions: fiber diameter of ca. 10 µm and length up to several millimetres. The fibers present a high degree of entanglement consecutive to the synthesis process and offer a high contact surface to the reactant. For example, the carbon material may be a commercial graphite felt.

The term "carbon felt" (CF) as used herein refers to a textile material that predominantly comprises randomly oriented and intertwined carbon filaments or fibers. Without limitation, carbon felt suitable for use in the instant invention is commercially available e.g., from Avcarb or Cera Materials. Advantageously, the carbon felt may have a thickness of from about 2 mm to about 20 mm. For example, the carbon felt may have a thickness of from about 4 to about 15 mm, from about 6 to about 10 mm, or from about 2 to about 6 mm. For example, the carbon felt may have a geometric surface area of 0.19 m²/g for fibres of 10 µm diameter, a density of about 2.1 g/cm³ and a BET of 4 m²/g, or of 1.9 m²/g when the carbon contains 90% porosity.

The CF can be also used with different configurations, e.g., as such, planar or in "rolled" configuration, for giving a different surface contact and length depending to the downstream applications. "Rolled CF" refers herein to a carbon felt wrapped around an axis. The rolled CF may have any size; it may have for example a diameter comprised between 20 and 2,000 mm, preferably between 40 to 1,000 mm, and most preferably between 100 to 800 mm and a length comprised between 30 and 3,000 mm, preferably between 100 to 2,000 mm, and most preferably between 300 to 800 mm.

Another example of carbon material is "carbon nanotube" or "CNT" that may refer to a hollow cylindrical or tube shape carbon structure, defining a void therein, which may be empty or filled with another material. CNTs may be closed at one or both ends. CNTs may be conceptualized as rolled graphene sheets, having a hexagonal lattice of carbon molecules with basal planes exposure. Depending on the rolling degree and the way the original graphene sheet is formed, carbon nanotubes of different diameter and internal geometry can be formed. Carbon nanotubes formed by rolling up of a single sheet forming the aforementioned cylinder, are called "single-walled" carbon nanotubes. The carbon nanotubes formed by rolling up more than one sheet of graphene with a structure that resembles a series of concentric cylinders of increasing diameters from the center to the periphery are called "multi-walled" carbon nanotubes. Suitable carbon nanotubes for use in the present invention encompass single-walled carbon nanotubes as well as multi-walled carbon nanotubes. In certain embodiments wherein carbon nanotubes are multi-walled carbon nanotubes, the multi-walled carbon nanotubes comprise 2 or more, such as from 2 to 20, or 5 to 50, graphitic layers. In certain embodiments, carbon nanotubes as used herein have a high aspect ratio, i.e. length-to-diameter ratio, preferably an aspect ratio of between 10 and 10,000,000 to 1, such as between 100 and 10,000 to 1. In certain embodiments, carbon nanotubes as used herein have an average outer diameter of about 2 to 100 nm, such as about 5 to 50 nm, such as about 8 to 30 nm, such as about 20 nm. The average inner diameter of carbon nanotubes as used herein can be about 0.5 to 100 nm, or about 1 nm to 50 nm.

Another example of carbon material is "carbon nanofiber" or "CNF" including a carbon-containing material comprising a solid cylindrical shape, with prismatic planes exposure, mostly free of voids meaning without a hollow central portion, despite some small channel could exist. A carbon nanofiber may be similar to a carbon nanotube (CNT), but may include a solid core rather than a hollow central portion, and prismatic planes, with higher reactivity, exposure instead of basal ones. Carbon nanofibers may be formed through any method known in the art, including deposition from carbon containing vapour, such as by catalytic chemical vapour deposition (CCVD) using different gaseous carbon sources wherein carbon is deposited in the presence of a transition metal catalyst on a macroscopic substrate, or other methods of forming carbon nanofibers known in the art.

Advantageously, carbon nanofibers may have a length of about 100-1000 nm, such as about 150-500 nm. In certain embodiment, carbon nanofibers as used herein may have the aspect ratio, i.e. the ratio of length to the outer diameter, of preferably more than about 10, such as more than about 50, or more than about 100, or more than about 1000, or more than about 2000.

Advantageously, carbon nanofibers as used herein may have a mean average diameter less than 1000 nm. In certain embodiments, the carbon nanofibers have a mean average diameter less than 500 nm, such as less than 300 nm.

It is worthy to note that both CNT and CNF can be grown on macroscopic substrates such as ceramics or oxides, i.e. silicon carbide, silica, alumina, and the combination of them, or also on other host substrates such as activated carbon or even graphite and carbon felt. Such structured composites could allow one to control the flow pattern within the solid bed as well as to increase the surface contact between the reactant and the solid.

Other examples of suitable forms of carbon materials include grains having an average particle diameter of 0.1 to 5 mm, extrudates with an average particle diameter of 1 to 5 mm and lengths up to 2, 3, 4, 5, 6 or more mm, trilobes with an average particle diameter ranged between 1 to 5 mm and length between 1 to 10 mm, foams with ppi (pores per inch) ranged from 60 to 5 ppi, honeycombs with cpsi (cells per square inch) ranged from 5 to 900, tubes with aspect ratios of about 5:1 (meaning 1 mm diameter x 5 mm long), 3:1 or 2:1, depending on the diameter of the material.

The heat conductor material, particularly the carbon material, or more particularly the metal-free carbon material, may have a BET (Brunauer, Emmet et Teller) surface area of at least 0.10 m²/g and up to 2,000 m²/g, as determined by ASTM-D-3663 (2020), for example from 0.20 to 1,500 m²/g, from 0.40 to 1,200 m²/g, from 0.50 to 1,000 m²/g, from 1.0 to 900 m²/g, or from 4.0 to 400 m²/g.

A very high BET value means the presence of micropores which have no particular function but which do not interfere with the reaction. In some preferred embodiments, the BET surface area of the heat conductor material, particularly the carbon material, or more particularly the metal-free carbon material, is as small as possible, for example lower than 30.0 m²/g, lower than 20 m²/g, lower than 6.0 m²/g, 8.0 m²/g or even lower than 6.0 m²/g. Without wanting to be bound by a particular mechanism of action, it is possible that in such case, the intrinsic thermal conductivity of the material is higher which allows higher heat dissipation within it. It may also allow shifting the conversion products towards C₂-C₄ olefin. In the case of plastic to olefin (PTO) process, the results seem to indicate that the external surface area, i.e., exposed geometric surface, is an important factor to convert plastic into light olefins. Advantageously, the heat conductor material, particularly the carbon material, or more particularly the metal-free carbon material, is a non-porous or low porous material, i.e., characterized by the absence of a network of pores or a minimal pore network, in order to have a small specific area. In this embodiment, the material may have a pore diameter higher than 500 nm, higher than 1 µm, higher than 3 µm or even greater than 5µm, as measured by ASTM D4284 (Standard Test Method for Determining Pore Volume Distribution of Catalysts and Catalyst Carriers by Mercury Intrusion Porosimetry).

In some embodiments, the heat conductor material, particularly the carbon material, or more particularly the metal-free carbon material, may have a geometric structure allowing a good connectivity between its primary particles, and therefore a high intrinsic thermal conductivity of the carbon material allowing the high heat dissipation within its matrix. The geometric surface of the material may be for example greater than or equal to about 1.10⁻² m²/g, or greater than or equal to about 1.10⁻³ m²/g, or preferentially greater than or equal to about 1.10⁻¹ m²/g, and up to 2 m²/g. The geometric surface may be measured by any mean or method known by the skilled person, for example by X-ray computed microtomography (Moncada Quintero et al.:" Investigating mass transfer coefficients in lean methane combustion reaction through the morphological and geometric analysis of structured open cell foam catalysts", Chemical Engineering Science Volume 281, 5 November 2023, 119138 ([18])).

In some embodiments, the heat-conductor material, especially the carbon material, is not mixed with the plastic material to be converted during step b) or with the product obtained at step a) if step a) is present. For example, the heat-conductor material may be arranged as a packed bed (also called sometimes fixed bed), preferably with 3D connected structured materials, in order to favour a good continuity of matter within the whole reaction zone. Therefore, forms as felt, fiber, for example nanofiber, filament, 2D or 3D fabrics, foam as open cell foam, 3D-printed structures, sphere, cloth, monolith, extrudates as honeycombs, rod-shaped, sticks and particles, tube, for example nanotube, ring, trilobes, tablets and nanotablets are preferred. More preferably, the form is felt and most preferably rolled felt with connected structure and with variable length depending to the reaction conditions. Such connected structured materials allow the heat to be rapidly vectorised in the whole matrix of the packed bed and thus, reducing the overall power input from the inductor for a given reaction temperature.

As mentioned above, the heat-conductor may be a combination of at least two materials as defined above.

As mentioned above, the step of cracking is carried out at a temperature greater than or equal to 600 °C, preferably greater than or equal to 650 °C. It may be for example greater than or equal to 670°C, or to 700°C, or to 750°C, or to about 800 °C. The temperature may be adjusted by the skilled person in the light of his knowledge of the technical field. For example, it may be adjusted depending on the nature and amount of plastic, the presence or absence of heat conductor materials.

As mentioned above, the residence time during step b) of the plastic or of the product obtained at step a) should be sufficient to prevent the melted plastic from blocking the gas passage in step b) as plastic does not heat up because it is insulating. Preferably, the residence time in step b) is comprised between 1s and 600s, preferably between 1 s and 120 s, preferably between 2 s and 50 s, for example 3 s and 20 s, or 5 s and 10 s.

Other cracking conditions as the pressure within the reactor, may be determined by the skilled person in the light of his knowledge of the technical field, especially depending on the nature and amount of plastic, the presence or absence of heat conductor materials, or of the nature of the heat-conductor material. For example, depending on the heat-conductor material nature of the cracking step, the liquid vs gaseous fraction can be tuned by changing the reaction conditions.

Advantageously, at the end of the cracking step, the resulting liquid hydrocarbons (also named "liquid fraction") may be condensed, and/or the gaseous resulting products (also named "gas fraction") may be directed to gas chromatography for analysis. Advantageously, the gas fraction may comprise at least 5.0 mol.% of unsaturated C₂ to C₄ hydrocarbons, and preferably at least 30.0 mol.% or preferably at least 50.0 mol.% or preferably at least 70.0 mol.% of unsaturated C₂ to C₄ hydrocarbons.

Advantageously, liquid fraction, can be further processed to produce suitable hydrocarbons which can be further processed to produce suitable hydrocarbons which can be used in different chemical processes, i.e. fuel for transportation, or it could also be recycled onto the heat-conductor material for being cracked down into light olefins, i.e. C₂-C₄ olefins.

In some embodiments of the invention:
- step a) is present.
- step b) is carried out on a carbon felt,
- plastic at the exit of step a) is constituted by C₅-C₅₀ waxes or by other plastic in step a).

Advantageously, in such embodiments, the process of the invention may comprise:
- step a) of pre-cracking plastic, which is carried out on silicon carbide or carbon material or other heatable materials, at a temperature comprised between 450°C and 500°C, and
- step b) which is carried out on a carbon felt, at a temperature greater than or equal to 650 °C.

In another embodiment, the process of the invention comprises:
- step a) of pre-cracking the plastic, which is carried out on silicon carbide or carbon material or other heatable materials, at a temperature comprised between 450°C and 500°C, and
- step b) which is carried out without any heat-conductor material, at a temperature greater than or equal to 650 °C,
- plastic is constituted by C₅-C₅₀ waxes or by other plastic.

In another embodiment, the process of the invention comprises:
- step a) of pre-cracking the plastic, which is carried out without any heatable material, at a temperature comprised between 450°C and 500°C, and
- step b) which is carried out without any heat-conductor material, at a temperature greater than or equal to 650 °C
- plastic is constituted by C₅-C₅₀ waxes or by other plastic.

In another embodiment of the invention:
- step a) is not present,
- step b) is carried out on a carbon felt or without any heat-conductor material, at a temperature greater than or equal to 650 °C,
- plastic is constituted by C₅-C₅₀ waxes or by other plastic.

In another embodiment of the invention:
- step a) is not present,
- step b) is carried out on a carbon felt, at a temperature greater than or equal to 650 °C,
- plastic is constituted by C₅-C₅₀ waxes.

In another embodiment of the invention:
- step a) is not present,
- step b) is carried out without any heat-conductor material, at a temperature greater than or equal to 650 °C,
- plastic is constituted by C₂₀-C₅₀ waxes.

In other embodiments of the invention:
- step a) is not present,
- step b) is carried out on a carbon felt or without any heat-conductor material, at a temperature greater than or equal to 650 °C,
- plastic is other than C₂₀-C₅₀ waxes.

In this embodiment, waxes having from 20 to 40 carbon atoms are mainly obtained at the end of step b).

This invention is further illustrated by the following examples with regard to the annexed drawings that should not be construed as limiting.

### Brief description of the figures

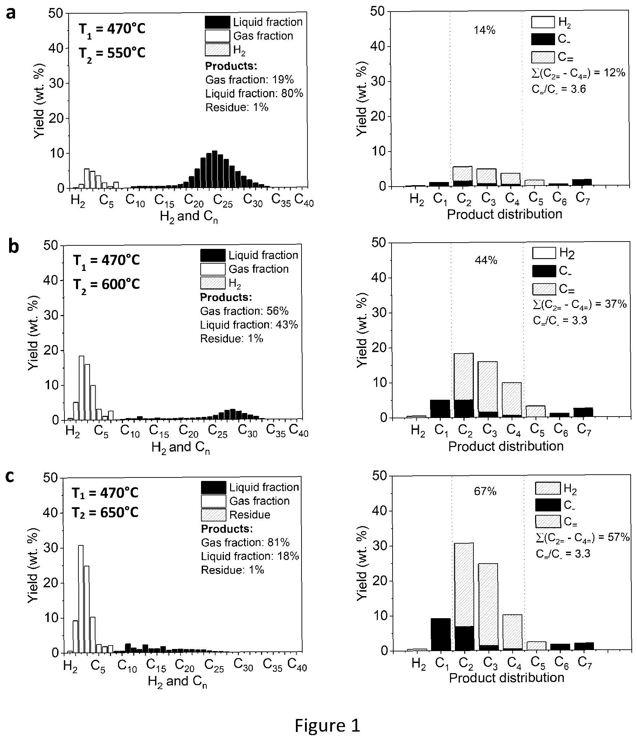

- Figure 1: represents cracking of a model plastic based on high density polyolefins (HDPE) on a material based on carbon felt under indirect heating by convection and conduction. The process consists of two stages: a pre-cracking stage under indirect Joule heating to 470°C and a cracking stage under indirect Joule heating at 550°C to 650°C. Reaction conditions: catalyst mass = 1.6 g, HDPE feed = 10 g/h, carrier gas = 30 mL/min argon, reaction temperature = variable from 550°C to 650°C, pressure = atmospheric.

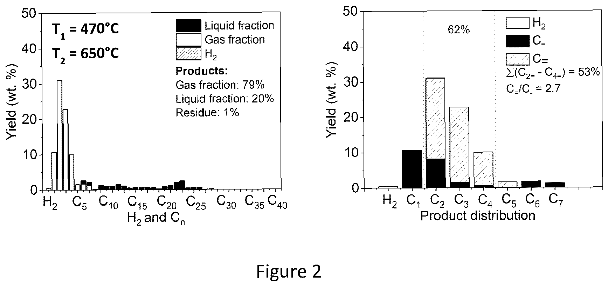

- Figure 2: represents cracking of a model plastic based on high-density polyolefins (HDPE) in a two-stage reactor (similar to that described in Fig. 1) operated under indirect heating by convection and conduction. The process consists of two stages: a pre-cracking stage under indirect heating to 470°C and a cracking stage under indirect heating at 650°C with empty reactor. Reaction conditions: HDPE charge = 10 g/h, carrier gas = 30 mL/min argon, reaction temperature = 650°C, pressure = atmospheric.

### Examples

### Example 1: PTO Process on Model HDPE Plastic Waste on carbon felt and with a pre-cracking step under indirect Joule heating

In this example, the conversion of a model plastic based on high density polyolefins (HDPE) into light olefins is carried out by cracking of a model plastic based on high density polyolefins (HDPE) on a material based on carbon felt (CF) with rolled structure in step a) and step b), under indirect heating by convection and conduction in step a) and step b).

The process consists of two stages: a pre-cracking stage under indirect Joule heating to 470°C and a cracking stage under indirect Joule heating at variable temperatures. Reaction conditions: catalyst mass = 1.6 g, HDPE feed = 10 g/h, carrier gas = 30 mL/min argon, reaction temperature = variable from 550 °C to 650 °C, pressure = atmospheric.

The results indicate that tests carried out at temperatures below 600°C do not convert the polymer to shorter-chain hydrocarbons (Fig. 1a). When the temperature is increased to 600°C, the polymer is rapidly degraded to produce shorter-chain hydrocarbons, in particular light olefins such as ethylene, propylene and butylene (Fig. 1b).

The cracking performance on the CF material operated under Joule heating mode further increases from 600 °C to 650 °C: indeed, gas fraction C₂-C₈ fraction increases from 56% to 81% while C₂-C₄ olefinic fraction reached about 57% (Fig. 1c). According to the results increasing the second stage temperature from 600 °C to 650 °C leads to a significant improvement of the light olefins yield which passes from 37 % to 57 % (Fig. 1b vs 1c).

### Example 2: PTO Process on Model HDPE Plastic Waste on carbon felt only in pre-cracking step and with a pre-cracking and cracking steps operated under convection and conduction indirect Joule heating

This test consists of maintaining the two stages of the process but removing the rolled carbon felt catalyst in the second stage (i.e. step b)). The reaction temperature was maintained at 650°C.

The process is a cracking of a model plastic based on high-density polyolefins (HDPE) in a two-stage reactor (similar to that described in Example 1) operated under indirect Joule heating by convection and conduction. The process consists of two stages: a pre-cracking stage under indirect heating to 470°C and a cracking stage under indirect Joule heating at 650 °C. Reaction conditions: HDPE charge = 10 g/h, carrier gas = 30 mL/min argon, reaction temperature = 650°C, pressure = atmospheric.

The results obtained in an empty drum for step b) show that the level of 57% of C₂-C₄ olefinic fraction obtained with rolled carbon felt in step b) (Fig. 1) is maintained at a level of 53% in case where step b) is carried out without heat-conductor material (i.e. in this case in empty drum: Fig. 2).

These results show that thermal cracking of the intermediate fraction from the first pre-cracking stage enables plastics to be cracked down into shorter fraction which can be further converted into light olefins and other liquid hydrocarbons that can subsequently be used in a variety of applications.

### Reference List

1. Onwudili J. A., Muhammad C., Williams P. T. Influence of catalyst bed temperature and properties of zeolite catalysts on pyrolysis-catalysis of a simulated mixed plastics sample for the production of upgraded fuels and chemicals. J. Energ. Inst. 92, 1337-1347 (2019).
2. Lopez G., Artetxe M., Amutio M., Bilbao J., Olazar M. A review on thermal and catalytic pyrolysis of plastic solid waste (PSW). Thermochemical routes for the valorization of waste polyolefinic plastics to produce fuels and chemicals. A review. Renewable Sustainable Energy Rev. 73, 346-368 (2017).
3. Dogu O., Pelucchi M., Van de Vijver R., Van Steenberge P. H. M., D'hooge D. R., Cuoci A., Mehl M., Frassoldati A., Faravelli T., Van Geem K. M. The chemistry of chemical recycling of solid plastic waste via pyrolysis and gasification: state-of-the-art, challenges, and future directions. Prog. Energy Combust. Sci. 84, 100901 (2021).
4. J.-P. Lange, Managing Plastic Waste-Sorting, Recycling, Disposal, and Product Redesign, ACS Sustain. Chem. Eng., 2021, 9, 15722-15738 https://doi.org/10.1021/acssuschemeng.1c05013.
5. Layritz, L. S., Dolganova, I., Finkbeiner, M., Luderer, G., Penteado, A. T., Ueckerdt, F., et al. (2021). The Potential of Direct Steam Cracker Electrification and Carbon Capture & Utilization via Oxidative Coupling of Methane as Decarbonization Strategies for Ethylene Production. Appl. Energ. 296, 117049. doi:10.1016/j.apenergy.2021.117049.
6. Schiffer Z. J., Manthiram K. Electrification and Decarbonization of the Chemical Industry. Joule 1, 10-14 (2017).
7. Jie X., Li W., Slocombe D., Gao Y., Banerjee I., Gonzalez-Cortes S., Yao B., Almegren H., Alshihri S., Dilworth J., Thomas J., Xiao T., Edwards P. Microwave-initiated catalytic deconstruction of plastic waste into hydrogen and high-value carbons. Nat. Catal. 3, 902-912 (2020).
8. Zhou N., Dai L., Lv Y., Li H., Deng W., Guo F., Chen P., Lei H., Ruan R. Catalytic pyrolysis of plastic wastes in a continuous microwave assisted pyrolysis system for fuel production. Chem. Eng. J. 418, 129412 (2021).
9. Wang, W., Tuci, G., Duong-Viet, C., Liu, Y., Rossin, A., Luconi, L., Nhut, J.-M., Nguyen-Dinh, L., Giambastiani, G., Pham-Huu, C., 2019. Induction heating: an enabling technology for the heat management in catalytic processes, ACS Catal., 2019, 9, 7921-7935.Khattak et al., 2019.
10. Y. Zhang, D. Duan, H. Lei, E. Villota, R. Ruan. Jet fuel production from waste plastics via catalytic pyrolysis with activated carbons. Appl. Energy 251, 113337 (2019).
11. Tran X. T., Mun D. H., Shin J., Kang N. Y., Park D. S., Park Y.-K., Choi J., Kim D. K., Maximizing light olefins production via one-pot catalytic cracking of crude waste plastic pyrolysis oil, Fuel 361, 130703 (2024).

## Claims

1. Process for converting plastic into raw material, comprising:
a) optionally, a step of pre-cracking the plastic, which is carried out at a temperature comprised between 250°C and 500°C, preferably between 450°C and 500°C, and
b) a step of indirect joule heating of the plastic or of the product obtained at step a) if step a) is present, at a temperature greater than or equal to 600 °C, preferably greater than or equal to 650 °C,
wherein during step b) and, when it is present, step a), the residence time of the plastic or the product obtained at step a) is comprised between 1 second and 30 minutes.

2. Process according to claim 1, wherein the plastic exited from step a) is constituted by C₅-C₅₀ waxes and is subsequently submitted to step b).

3. Process according to claim 1 or 2, wherein step b) of indirect Joule heating is carried out on a heat conductor material, preferably a carbon material, more preferably a metal-free carbon material.

4. Process according to claim 3, said carbon material or metal-free carbon material being selected from the group comprising graphite, graphene, mesoporous carbon, carbon black, acetylene black, pyrolytic carbon, activated carbon, carbon nanofibers and carbon nanotubes and any combinations thereof.

5. Process according to any one of the preceding claims, wherein said heat conductor material has a morphology chosen among felt, for example rolled felt, grain, fiber, for example nanofiber, filament, 2D or 3D fabrics, foam as open cell foam, 3D-printed structures, sphere, cloth, monolith as honeycombs, extrudates, rod-shaped, sticks and particles, tube, for example nanotube, ring or trilobes, tablets, nanotablets and any combinations thereof.

6. Process according to claim 3 to 5, wherein said heat conductor material has a BET surface area of at least 0.10 m²/g and up to 2000 m²/g, as determined by ASTM-D-3663 (2020), for example from 0.20 to 1,500 m²/g, from 0.40 to 1,200 m²/g, from 0.50 to 1,000 m²/g, from 1.0 to 900 m²/g, or from 4.0 to 400 m²/g.

7. Process according to claim 1, wherein when it is present, the optional step a) of pre-cracking is carried out under induction heating, indirect Joule heating, burner heating or microwave heating.

8. Process according to any one of the preceding claims, wherein when it is present, the optional step of pre-cracking is carried out on carbon, silicon carbide, metal parts or any heatable material, or even insulator if the residence time is sufficiently long to melt down the plastic, materials.

9. Process according to any one of the preceding claims, wherein said plastic is at least one plastic selected among high and low-density polyethylene, polypropylene, polystyrene, mixed industrial waste plastic, as low-density polyethylene, PET, PVC and polystyrene containing solid residue, plastics containing solid residue, C₅-C₅₀ waxes and polymers melted at temperatures between 200 and 600°C.

10. Process according to any one of the preceding claims, wherein said raw material is at least one selected among C₂-C₄ olefins and/or other hydrocarbons.

11. Process according to claim 10, wherein said C₂-C₄ olefins are at least one chosen among ethylene, propylene and butylene and diolefins made from ethylene, propylene and butylene, and said other hydrocarbons are at least one chosen among aromatic hydrocarbons, C₅₊ liquid hydrocarbons, paraffinic gaseous C₁ to C₄ hydrocarbons and waxes having from 20 to 40 carbon atoms.

12. Process according to claim 11, wherein said C₅₊ liquid hydrocarbon is fuel oil.

13. Process according to claim 1, wherein:
- step a) is not present,
- step b) is carried out on a carbon felt,
- plastic is constituted by C₅-C₅₀ waxes.

14. Process according to claim 1, wherein :
- step a) is present,
- step b) is carried out on a carbon felt,
- plastic at the exit of step a) is constituted by C₅-C₅₀ waxes.
